# FASCICULE DE BREVET EUROPEEN

(11) **EP 2 976 855 B1**
(45) Date de publication et mention de la délivrance du brevet: **16.05.2018**
(21) Numéro de dépôt: 14712279.0
(22) Date de dépôt: 21.03.2014
(51) Int. Cl.: H04L 12/26

(54) **PROCÉDÉ DE DÉTERMINATION DU NOMBRE ET DU POSITIONNEMENT DE SONDES DPI DANS UN RÉSEAU DE COMMUNICATION**
VERFAHREN ZUR BESTIMMUNG DER ANZAHL UND POSITIONIERUNG VON DPI-SONDEN IN EINEM KOMMUNIKATIONSNETZ
METHOD OF DETERMINING THE NUMBER AND THE POSITIONING OF DPI PROBES IN A COMMUNICATION NETWORK

(30) Priorité: 22.03.2013 FR 1300673
(43) Date de publication de la demande: 27.01.2016
(73) Titulaire: THALES, 92200 Neuilly-sur-Seine (FR)
(72) Inventeur: BOUET, Mathieu, F-92622 Gennevilliers (FR); LEGUAY, Jérémie, F-92622 Gennevilliers (FR); CONAN, Vania, F-92622 Gennevilliers (FR)
(74) Mandataire: Lavoix
(86) Numéro de dépôt international: PCT/EP2014/055745
(87) Numéro de publication internationale: WO 2014/147241

(56) Documents cités:
- MIROSLAV MRIC: "An efficient genetic algorithm for solving the multi-level uncapacitated facility location problem", COMPUTING AND INFORMATICS, SLOVAK ACADEMIC PRESS LTD, SK , vol. 29 1 janvier 2010 (2010-01-01), pages 183-201, XP002717616, ISSN: 1335-9150 Extrait de l'Internet: URL:http://www.google.nl/url?sa=t&rct=j&q= &esrc=s&source=web&cd=1&ved=0CDAQFjAA&url= http%3A%2F%2Fwww.cai.sk%2Fojs%2Findex.php% 2Fcai%2Farticle%2Fdownload%2F80%2F64&ei=ss alUuXFH4LV4gS0xID4AQ&usg=AFQjCNGGiBc0pPMgW G5oXExXazgJ6L2HXQ&bvm=bv.57752919,d.bGE [extrait le 2013-12-04]
- OFER BIRAN ET AL: "A Stable Network-Aware VM Placement for Cloud Systems", CLUSTER, CLOUD AND GRID COMPUTING (CCGRID), 2012 12TH IEEE/ACM INTERNATIONAL SYMPOSIUM ON, IEEE, 13 mai 2012 (2012-05-13), pages 498-506, XP032186566, DOI: 10.1109/CCGRID.2012.119 ISBN: 978-1-4673-1395-7
- JOE WENJIE JIANG ET AL: "Joint VM placement and routing for data center traffic engineering", INFOCOM, 2012 PROCEEDINGS IEEE, IEEE, 25 mars 2012 (2012-03-25), pages 2876-2880, XP032179080, DOI: 10.1109/INFCOM.2012.6195719 ISBN: 978-1-4673-0773-4

## Description

L'invention a pour domaine celui des procédés de détermination du nombre et du positionnement de sondes DPI dans un réseau de communication.

En informatique, et plus particulièrement en cyber-sécurité, une analyse par inspection des paquets en profondeur (DPI dans ce qui suit pour « deep packet inspection » en anglais) est l'activité consistant à analyser le contenu (en-tête et charge utile) d'un paquet de données (tel qu'un datagramme IP et son contenu) intercepté dans un flux de données circulant sur un réseau de communication, de façon à en tirer des statistiques d'utilisation du réseau, à filtrer les paquets, à détecter des intrusions, etc.

Pour une telle analyse DPI, il est connu de connecter à un équipement d'infrastructure du réseau de communication, tel qu'un routeur, un dispositif propre à effectuer cette inspection des paquets en profondeur. Un tel dispositif est dénommé dans ce qui suit « sonde DPI ».

Actuellement, une sonde DPI est un équipement dédié à la réalisation de la fonction d'analyse DPI qui est connecté à un équipement d'infrastructure du réseau. A courts termes, il est également envisageable que les sondes DPI soient virtualisées, c'est-à-dire prennent la forme d'applications logicielles exécutées sur un ou plusieurs des équipements d'infrastructure du réseau.

Pour analyser la totalité des flux circulant sur le réseau, il est alors tentant munir le réseau d'une composante DPI, permettant de mettre en oeuvre l'analyse DPI des flux, qui comporte un nombre important de sondes DPI positionnées à travers le réseau.

Cependant, une sonde DPI présente un coût financier important soit pour l'achat d'un équipement dédié, soit pour la licence d'utilisation du logiciel correspondant.

De plus, le fonctionnement d'une sonde DPI présente un coût en termes de ressources matérielles (temps d'occupation d'un processeur) et en termes de ressources énergétiques (puissance électrique adaptée à l'équipement réalisant la fonction d'analyse DPI).

Mais surtout, une analyse DPI doit s'effectuer de manière totalement transparente pour l'utilisateur du réseau de communication qui par exemple, à partir d'un terminal utilisateur, interroge un terminal serveur.

Or, lorsqu'un équipement d'infrastructure aval est équipé d'une sonde DPI, les équipements d'infrastructures amont sont reprogrammés dynamiquement afin de router tout ou partie des paquets de données incidents vers l'équipement d'infrastructure aval équipé de la sonde DPI. Ainsi, la mise en oeuvre d'une analyse DPI modifie la répartition des flux de données dans le réseau de communication. Si la sonde est mal positionnée dans le réseau ou que trop peu de sondes sont utilisées, la redirection des paquets de données peut conduire à surcharger certains liens du réseau et, dans des cas extrêmes, à aller au-delà de la capacité en bande passante d'un ou plusieurs liens du réseau. Ceci engendre des délais et des erreurs dans la transmission des paquets. La qualité de service du réseau de communication s'en trouve dégradée.

De plus, en forçant le routage d'un paquet à travers un équipement d'infrastructure équipé d'une sonde DPI, le chemin suivit par un paquet entre le terminal émetteur et le terminal destinataire est rallongé. Si la sonde est mal positionnée dans le réseau ou que trop peu de sondes sont utilisées, la modification des chemins de routage des paquets peut conduire à une surconsommation de la bande passante et à une augmentation importante du temps de latence (temps, évalué au niveau d'un terminal utilisateur, entre l'émission d'un message de requête à destination d'un terminal serveur et la réception d'un message de réponse en provenance de ce terminal serveur).

Ainsi les sondes DPI doivent être positionnées aux bons endroits dans le réseau de communication afin de permettre l'analyse d'un maximum des flux circulant sur le réseau sans pour autant réduire outre mesure la bande passante disponible ou dégrader la qualité de service.

Il y a donc un besoin pour une procédure permettant de déterminer le nombre et le positionnement des sondes DPI dans un réseau de communication en fonction d'un certain nombre de critères, tels que la réduction des coûts de déploiement et d'exploitation de la composante DPI, le traitement efficace d'un maximum de flux, la minimisation de la surcharge sur le réseau de communication occasionnée par l'analyse DPI, etc. Ces objectifs orthogonaux sont d'autant plus difficiles à respecter simultanément que la taille du réseau de communication étudié augmente.

Par ailleurs, l'article de MIROSLAV, « *an efficient genetic algorithm for solving the multilevel uncapacitated facility location problem* », divulgue un algorithme génétique permettant de trouver une solution optimale à un problème consistant à déterminer le lieu d'implantation, le long d'un réseau routier, d'usines pour à la fois minimiser les coûts d'implantation de ces usines (par exemple en en limitant leur nombre) et minimiser les coûts de transport entre une usine et une autre usine ou un client. Cependant, cet algorithme est fondé sur l'utilisation d'une métrique prédéterminée et constante au cours de l'exécution de l'algorithme.

L'invention a donc pour but de pallier le problème précité.

A cette fin, l'invention a pour objet un procédé de détermination du nombre et du positionnement de sondes DPI dans un réseau de communication, les sondes DPI constituant une composante DPI permettant une analyse du type « inspection des paquets en profondeur » de paquets de données interceptés sur le réseau, caractérisé en ce qu'il comporte les étapes consistant à :
a)- à partir d'un groupe d'individus parents, générer une population d'individus enfants, chaque individu correspondant à une configuration possible de la composante DPI en termes de nombre et de positionnement de sondes DPI dans le réseau de communication ;
b)- pour chaque individu de la population d'individus enfants, simuler le comportement du réseau de communication équipé de la composante DPI correspondant audit individu ;
c)- évaluer une valeur d'une fonction de coût pour ledit individu en fonction notamment du comportement simulé ;
d)- sélectionner dans ladite population d'individus enfants, un groupe d'individus enfants présentant les valeurs les plus faibles de la fonction de coût ; et, tant qu'une condition de convergence n'est pas respectée, Itérer les étapes a) à d) en considérant en tant que groupe d'individus parents pour l'itération suivante, le groupe d'individus enfants de l'itération courante, sinon retenir un individu du groupe d'individus enfants en tant qu'individu solution, l'individu solution donnant la configuration optimale de la composante DPI.

Par la mise en oeuvre d'un algorithme génétique, le procédé selon l'invention permet de trouver une solution approchée d'une solution constituant un optimal local au besoin exprimée ci-dessus et qui constitue en fait un problème d'optimisation.

En effet, ce problème d'optimisation ne peut être résolu de manière exacte par une procédure mathématique permettant de trouver, en un temps fini, une solution exacte respectant les différents critères d'intérêt. Il s'agit en effet d'un problème mathématique rentrant dans la catégorie des problèmes NP-complets.

Suivant des modes particuliers de réalisation le procédé comporte une ou plusieurs des caractéristiques suivantes, prises isolément ou suivant toutes les combinaisons techniquement possibles :
- la simulation du comportement du réseau comporte le calcul d'une matrice de routage pour l'individu considéré ;
- la fonction de coût est la somme pondérée de fonctions de coût élémentaires correspondant chacune à un critère quantitatif que doit respecter la configuration optimale de la composante DPI ;
- le critère est choisi parmi :
   - un premier critère consistant à minimiser le nombre de sondes DPI dans la composante DPI ;
   - un second critère consistant à minimiser la modification de la bande passante utilisée avec et sans la composante DPI ;
   - un troisième critère consistant à minimiser la modification du temps de latence avec et sans la composante DPI ;
   - un quatrième critère consistant à minimiser le nombre de flux qui ne sont pas analysés par la composante DPI ;
- l'étape de sélection dans la population d'individus enfants d'un groupe d'individus enfants consiste à retenir les K individus présentant les valeurs les plus faibles de la fonction de coût ;
- l'étape de génération d'une population d'individus enfants à partir d'un groupe d'individus parents consiste à recopier les individus dudit groupe dans ladite population et à compléter ladite population ;
- la population est complétée en générant un individu enfant par hybridation de deux individus parents choisi au hasard dans le groupe d'individus parents de manière à obtenir un individu enfant intermédiaire et à faire muter de manière aléatoire l'individu enfant intermédiaire pour obtenir ledit individu enfant ;
- un individu étant représenté par une liste ordonnée de bits, une mutation consiste à basculer la valeur d'un bit à 0 avec une première probabilité et à basculer la valeur d'un bit à 1 avec une seconde probabilité.

L'invention et ses avantages seront mieux compris à la lecture de la description qui va suivre, donnée uniquement à titre d'exemple et faite en se référant aux dessins annexés, sur lesquels :
- la figure 1 est une représentation schématique d'un réseau de communication devant être équipé d'une composante DPI ;
- la figure 2 est une représentation schématique d'un réseau modifié correspondant au réseau de la figure 1 équipé d'une composante DPI ;
- la figure 3 est une représentation schématique d'une plateforme informatique pour la mise en oeuvre du procédé de détermination du nombre et de la position d'une pluralité de sondes DPI dans un réseau de communication donné ; et,
- la figure 4 est une représentation sous forme de blocs du procédé mis en oeuvre sur la plateforme de la figure 3.

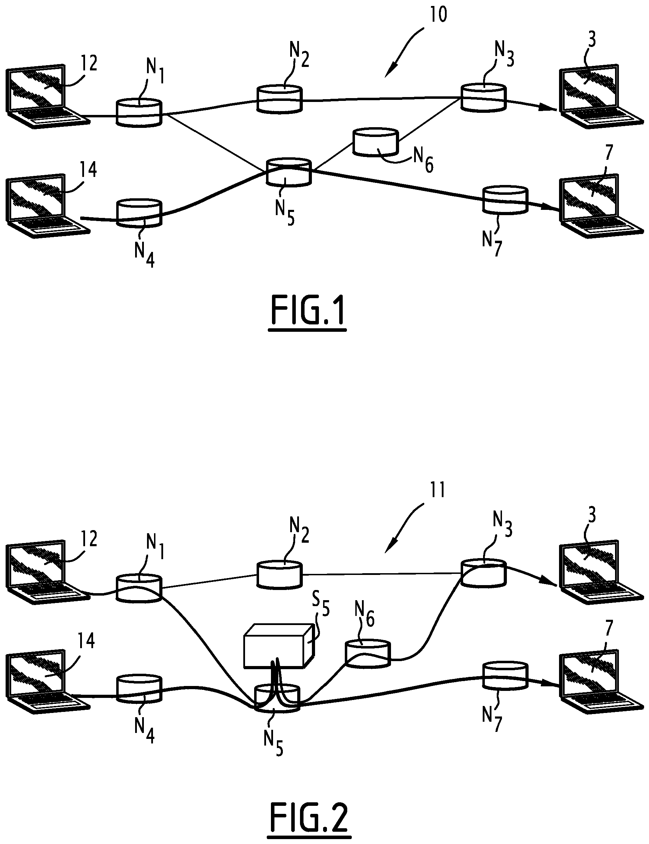

Sur la figure 1, on a représenté un réseau de communication 10 que l'on souhaite munir d'une composante DPI optimale, cette composante DPI comportant une ou plusieurs sondes DPI.

Le réseau 10 est constitué d'une pluralité de N noeuds et d'une pluralité de L liens. Un lien Lij connecte entre eux un noeud amont Ni et un noeud aval Nj. Dans la suite, les liens sont bidirectionnels (Lij=Lji).

Chaque noeud Ni est identifié par un numéro logique consistant par exemple en un entier i.

Les noeuds Ni sont des équipements informatiques d'infrastructure constituant soit des passerelles constituant des points d'accès au réseau 10, tels que les noeuds N1, N4, N3 et N7, soit des routeurs, tels que les noeuds N2, N5 et N6.

Sur la figure 1 des terminaux clients 12 et 14 sont connectés respectivement aux passerelles N1 et N4, et des terminaux serveurs sont connectés respectivement aux passerelles N3 et N7.

Un terminal utilisateur est propre à émettre un message de requête à destination d'un terminal serveur. Celui-ci, en réponse, est propre à émettre un message de réponse à destination du terminal client ayant émis le message de requête.

Les différents messages ainsi émis sont transmis sur le réseau 10 sous forme de paquets de données. Le protocole de communication sur le réseau 10 est par exemple le protocole TCP sur IP.

A grands traits, un paquet comporte une partie d'en-tête contenant, entre autres choses, les adresses des terminaux émetteur et destinataire du paquet, et une partie de charge utile, contenant tout ou partie du message généré par le terminal émetteur.

Un paquet est propagé dans le réseau 10 de la manière suivante. Un noeud amont qui reçoit un paquet le réémet sur un lien sortant vers un noeud aval. Le noeud amont sélectionne le noeud aval vers lequel réémettre le paquet parmi l'ensemble des noeuds aval auquel il est relié, en fonction de l'adresse du terminal destinataire indiqué dans la partie d'en-tête du paquet. Le noeud amont comporte un ensemble de règles de routage permettant par exemple d'associer à l'adresse d'un terminal destinataire, l'identifiant logique du noeud aval vers lequel réémettre le paquet.

L'ensemble des paquets circulant sur un lien constitue un flux élémentaire sur ce lien. Il s'exprime en pourcentage de la bande passante de ce lien.

Sur la figure 1, sont représentés de manière schématique les flux élémentaires sur les liens du réseau 10 par un trait plus ou moins épais. Ainsi, lorsque le réseau 10 n'est pas équipé de sonde DPI, le trafic entre les noeuds N1 et N2 est faible, celui entre les noeuds N1 et N5 est moyen, et le flux entre les noeuds N4 et N5 est important.

Le réseau 10 est décrit par une topologie T0. La topologie consiste à définir la géométrie du réseau 10 en donnant chaque noeud du réseau et chaque lien connectant deux noeuds du réseau, et la capacité du réseau 10 en donnant les caractéristiques techniques de chaque noeud - en termes de fonction (routeur, passerelle équipée ou non de modules applicatifs du type pare-feu ou autre, etc.) et de capacité de calcul - et celles de chaque lien - en termes de bandes passantes.

Les flux à travers le réseau 10 pendant une période de fonctionnement de celui-ci sont décrits par une matrice de trafic M0. La matrice de trafic M0 décrit les échanges de paquets entre terminaux connectés au réseau 10 pendant la période d'utilisation caractéristique du réseau. Cette période peut correspondre à une utilisation normale du réseau 10, à une utilisation en cas de cyber-attaque du réseau 10, à une période de surcharge du réseau 10 à cause d'une campagne de spams, etc.

Sur la figure 2, est représenté un réseau modifié 11. Le réseau 11 correspond au réseau 10 augmenté d'une composante DPi. Celle-ci consiste en une sonde DPI S5 connecté à l'équipement d'infrastructure constituant le noeud N5.

Cette composante DPI est identifiée par une liste ordonnée associant à chaque numéro logique d'un noeud du réseau, un nombre binaire correspondant à la présence (bit égal à 1) ou non (bit égal à 0) d'une sonde DPI.

La composante DPI du réseau 11 est ainsi identifiée par la liste suivante :
(0, 0, 0, 0, 1, 0, 0)

Le trafic sur le réseau 11 est modifié par rapport à celui sur le réseau 10 de la figure 1, toutes choses égales par ailleurs. Le flux élémentaire entre les noeuds N1 et N2, alors qu'il était faible, est maintenant moyen. De plus, le chemin suivi par les paquets entre le terminal utilisateur 12 et le terminal serveur 22, au lieu de passer par les noeuds N1, N2 et N3, est maintenant modifié de manière à passer par les noeuds N1, N5, N6 et N3. Le flux de données entre le noeud N2 et le noeud N3 est faible alors qu'il était moyen avant l'implémentation de la sonde DPI S5.

La composante DPI du réseau 11 constitue le résultat de la mise en oeuvre du procédé décrit ci-dessous. La composante DPI constitue une solution permettant de réaliser de manière optimale une analyse DPI des flux de données circulant sur le réseau 11.

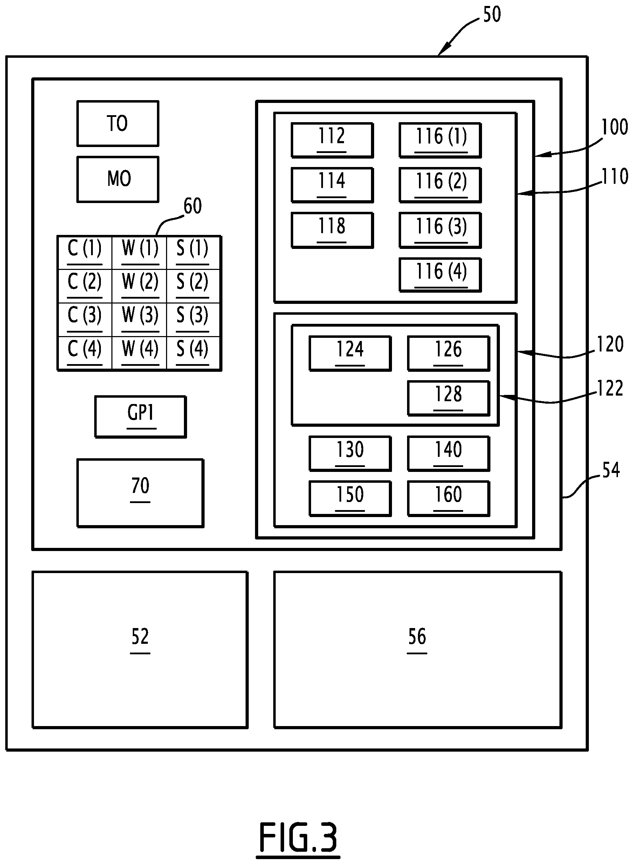

Sur la figure 3, est représentée schématiquement une plateforme informatique 50 programmée pour mettre en oeuvre le procédé de détermination du nombre et du positionnement de sondes DPI.

La plateforme 50 comporte un processeur 52, en tant que moyen de calcul, et une mémoire 54, en tant que moyen de stockage.

La plateforme comporte également une interface homme/machine 56 propre à offrir à un utilisateur la possibilité de saisir des données.

La mémoire 54 comporte différents paramètres de configuration. Ils sont par exemple saisis par l'utilisateur au moyen de l'interface 56.

Les paramètres de configuration comportent :
- la topologie T0 du réseau 10, pour lequel une configuration DPI optimale est recherchée ;
- une matrice de trafic M0 correspondant à une utilisation particulière du réseau 10;
- une liste 60 associant à chaque critères C(k) retenu dans l'optimisation, un poids W(k) et éventuellement un seuil S(k). Cette liste est définie par l'utilisateur au moyen par exemple d'un menu déroulant dans l'interface 56. A titre illustratif, sur la figure 3, quatre critères ont été sélectionnés par l'utilisateur ;
- Un groupe GP1 de G individus parents.

La mémoire 54 comporte une zone mémoire 70 comportant différentes variables intermédiaires utilisées lors de l'exécution du programme 100 :
- un groupe GPi de G individus parents ;
- une population PEi de P individus enfants ;
- un vecteur Vi associant à chaque individu de la population PEi la valeur d'une fonction de coût ;
- un groupe GEi de G individus enfants.

Dans ce qui suit, un individu correspond à une composante DPI possible sur le réseau 10. En conséquence, un individu est une liste ordonnée associant à chaque numéro logique d'un noeud du réseau un bit prenant la valeur 1 si le noeud considéré est connecté à une sonde DPI et la valeur 0 si le noeud considéré n'est pas connecté à une sonde DPI.

La mémoire 54 stocke les instructions d'un programme d'ordinateur 100 qui, lorsqu'elles sont exécutées par le processeur 52, permettent la mise en oeuvre du procédé.

Le programme 100 comporte un sous-programme 110 d'évaluation d'une fonction de coût H pour un individu courant Ij.

Le sous-programme 110 comporte un module 112 de modification de la topologie, qui est propre à prendre comme entrées la topologie T0 et les informations sur le nombre et la position des sondes DPI indiquées par l'individu courant Ij, pour générer en sortie une topologie modifiée Tj. En particulier, la topologie modifiée Tj prend en compte les modifications des caractéristiques du ou des équipements équipés de sondes DPI.

Le sous-programme 110 comporte un module 114 de simulation du trafic sur le réseau modifié défini par la topologie Tj.

Le module 114 prend en entrée la topologie Tj générée en sortie du module 112 et la matrice de trafic M0 contenu dans les paramètres de configuration stockés dans la mémoire 54.

Le module 114 détermine une matrice de routage Rj, c'est-à-dire l'ensemble des règles de routage mises en oeuvre par chacun des noeuds du réseau modifié Tj pour router un flux à analyser vers une sonde DPI.

Pour ce faire, le module 114 met en oeuvre des algorithmes complexes permettant de répartir le trafic défini par la matrice de trafic M0 sur le réseau modifié tout en respectant tout une série de contraintes. Ces contraintes peuvent être semblables à certains des critères utilisés dans la fonction de coût H.

Ainsi, la matrice de routage Rj est calculée pour définir le chemin le plus court entre un terminal émetteur et un terminal destinataire, qui passe également par un équipement d'infrastructure équipé d'une sonde DPI.

Le sous-programme 110 comporte une pluralité de modules 116(1) à 116(4) de calculs partiels de la fonction de coûts. Chaque module 116(k) est associé à un critère C(k) sélectionnable par l'utilisateur pour construire la fonction de coût H. Chaque module 116(k) est propre à prendre en entrée la matrice de routage Rj générée par le module 114 ainsi que la topologie modifiée T générée en sortie du module 112. Chaque module 116(k) permet de calculer un coût élémentaire Hj(k) pour l'individu courant Ij.

Ainsi le module 116(1) correspond au critère C(1) qui consiste à minimiser le nombre totale de sonde dans la composante DPI. La fonction de coût partielle H(1) est par exemple proportionnelle au nombre de sondes indiqué dans l'individu courant Ij. Eventuellement, la fonction de coût partielle H(1) est infinie lorsque le nombre de sondes dépasse un nombre seuil S(1) défini par l'utilisateur.

Ainsi, le module 116(2) correspond au critère C(2) qui consiste à minimiser la modification de la bande passante utilisée avec et sans la composante DPI représentée par l'individu courant Ij.

Ainsi, le module 116(3) correspond au critère C(3) qui consiste à minimiser la modification du temps de latence avec et sans la composante DPI représentée par l'individu courant Ij.

Ainsi, le module 116(4) correspond au critère C(4) qui consiste à minimiser le nombre de flux qui ne sont pas analysés la composante DPI représentée par l'individu courant Ij.

Le sous-programme 110 comporte un module 118 d'agrégation propre à calculer un coût global H, pour l'individu courant Ij, en sommant les différents coûts élémentaires Hj(k) générés par les modules 116(k) correspondants aux critères C(k) mentionnés dans la liste 60.

Eventuellement, la somme est pondérée en utilisant les poids W(k) définis par l'utilisateur dans la liste 60.

Le programme 100 comporte un sous-programme 120 de gestion de populations d'individus.

Le sous-programme 120 comporte un module 122 de génération d'une population d'individus enfants PEi à partir d'un groupe d'individus parents GPi.

Le module 122 comporte différents sous-modules :
- un sous-module 124 de recopie permettant de copier les G individus du groupe GPI en tant que G premiers individus de la population PEi ;
- un sous-module 126 d'hybridation permettant de créer un individu intermédiaire à partir d'un premier individu parent IP1 et d'un second individu parent IP2 choisis de manière aléatoire dans le groupe GPi. Pour ce faire, la liste associée à l'individu intermédiaire est construite à partir des q premiers bits de la liste associée au premier individu parent IP1 et des P-g dernier bits du second individu parent IP2. L'entier q peut être prédéterminée ou défini aléatoirement à chaque appel du sous-module 126 ;
- un sous-module 128 de mutation aléatoire, permettant d'altérer un individu intermédiaire pour générer un individu enfant IE, en convertissant chaque bit à 0 de l'individu intermédiaire à 1 avec une probabilité p1 et chaque bit à 1 de l'individu intermédiaire à 0 avec une probabilité p2. De préférence, p2 est supérieure à la probabilité p1 de manière à tendre vers un nombre réduit de sondes DPI dans le réseau.

Le sous-programme 120 comporte un module 130 de calcul de la fonction de coût pour chacun des individus Ij d'une population d'individus enfants PEi. Le module 130 est en fait propre à appeler le sous-programme 110 pour calculer la valeur Hj de la fonction de coût de chacun des individus Ij de la population d'individus enfants PEi.

Le sous-programme 120 comporte un module 140 de sélection propre à sélectionner les G individus Ij qui présentent les valeurs Hj de la fonction de coût les plus faibles dans une population d'individus enfants PEi. Le module 140 est propre à délivrer un groupe d'individus enfants GEi.

Le sous-programme 120 comporte un module 150 d'affectation propre à affecter un groupe d'individus enfants GEi en sortie du module 140 en tant que groupe d'individus parents GPi en entrée du module 122, pour l'itération suivante du sous-programme 120.

Le sous-programme 120 comporte enfin un module 160 de convergence permettant de vérifier le respect d'une condition de convergence.

Tant que cette condition n'est pas respectée, la population d'individus évolue en itérant l'exécution des sous programmes 110 et 120.

Lorsque cette condition est respectée, l'itération de l'exécution des sous programmes 110 et 120 est interrompue et l'individu solution du problème d'optimisation est l'individu ayant la valeur Hj la plus faible du groupe d'individus enfants GEi obtenu lors de la dernière itération des sous programmes 110 et 120.

Cet individu solution Is correspond à la composante DPI optimale qu'il s'agit d'implémenter sur le réseau 10 étudié.

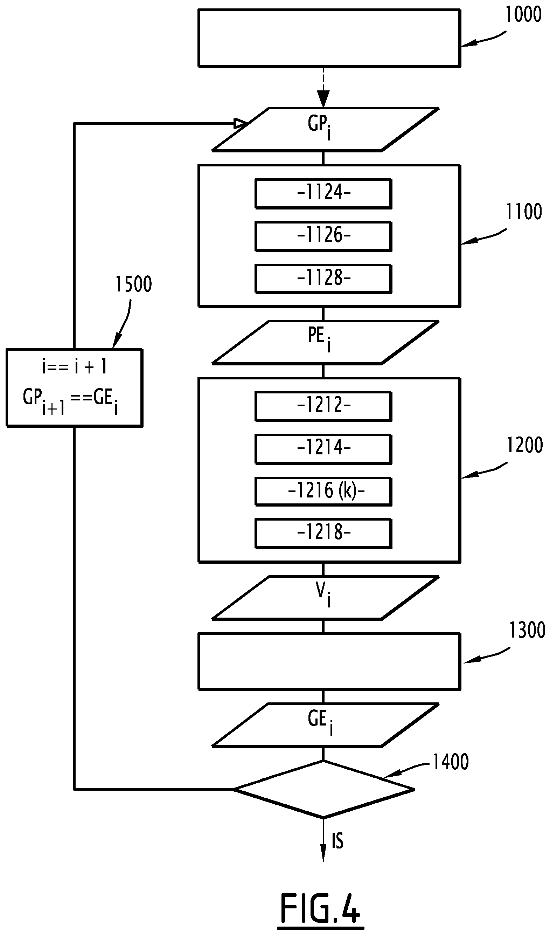

Sur la figure 4, le procédé comporte une étape initiale 1000 de configuration au cours de laquelle l'utilisateur renseigne la topologie initiale T0 du réseau 10 à étudier, la matrice de trafic M0, sélectionne les critères C(k) à considérer dans la fonction de coût H ainsi qu'éventuellement les poids W(k) et les seuils S(k) à affecter à chacun des critères sélectionnés (configuration de la liste 60), définit un groupe GP1 de G individus parents.

Puis le procédé proprement dit d'optimisation du nombre et du positionnement des sondes DPI dans le réseau 10 se poursuit par une boucle indexée par l'entier i.

Dans une étape 1100, d'exécution du module 122, une population d'individus enfants PEi est générée. Cette population comporte P individus. P vaut par exemple 50.

La génération d'effectue à partir d'un groupe d'individus parents GPi lu dans la zone 70. Ce groupe comporte G individus. G vaut par exemple 10.

A la première itération (i=1), le groupe GP1 correspond au groupe d'individus parents saisi par l'utilisateur au cours de l'étape 1000 de configuration.

Dans une sous-étape 1124, d'exécution du un sous-module 124, les G individus du groupe GPi sont recopiés, sans modification, dans la population PEi. Ceci permet de suivre l'évolution de la population d'individus entre deux itérations successives et la convergence du procédé.

La population PEi est complétée de P-K individus enfants (soit par exemple 40 individus enfants), qui sont respectivement obtenus :
- en exécutant (étape 1126) le sous-module 126 d'hybridation pour créer à partir d'un premier individu parent IP1 et d'un second individu parent IP2, choisis au hasard parmi les K(K-1)/2 paires possibles dans le groupe GPi, un individu enfant intermédiaire ;
- en exécutant (étape 1128) le sous-module 128 de mutation aléatoire, permettant de créer à partir de l'individu enfant intermédiaire, un individu enfant.

A l'étape 1200, correspondant à l'exécution du module 130, la valeur Hj de la fonction de coût H est calculée pour chaque individu Ij de la population PEi.

Pour ce faire, à l'étape 1212, d'exécution du module 112, la topologie T0 et modifiée en tenant compte du nombre et du positionnement des sondes DPI correspondant à l'individu Ij. Une topologie modifiée Tj est obtenue.

A l'étape 1214, d'exécution du module 114, la matrice de routage Rj du réseau défini par la topologie modifiée Tj est calculée à partir de la topologie modifiée Tj et de la matrice de trafic M0 définie lors de l'étape 1000 de configuration.

A l'étape 1216, les modules 116(k) des critères C(k) de la liste 60 sont exécutés successivement. Ainsi, à l'étape 1216(k), le calcul d'une valeur Hj(k) d'un coût élémentaire H(k) est effectué à partir de la matrice de routage Rj et de la topologie modifiée Tj.

A l'étape 1218, correspondant à l'exécution du module 118 d'agrégation, la valeur Hj du coût global pour l'individu Ij est calculée en sommant les différentes valeurs Hj(k) générées aux étapes 1216(k). Eventuellement, cette somme est pondérée en utilisant les poids W(k) définis par l'utilisateur lors de l'étape 1000 et lus dans la liste 60.

A l'issue de l'étape 1200, un vecteur Vi est obtenu. Un élément Vij correspond à la valeur Hj de la fonction de coût pour l'individu Ij de la population PEi.

A l'étape 1300, correspondant à l'exécution du module 140, les G individus Ij de la population PEi qui présentent les valeurs Hj les plus faibles (telles qu'indiquées dans le vecteur Vi) sont sélectionnés dans un groupe d'individus enfants GEi.

A l'étape 1400, correspondant à l'exécution du module 160, une vérification de la condition de convergence est effectuée.

Si l'écart entre la valeur la plus grande Hjmax et la valeur la plus faible Hjmin des valeurs Hj des individus du groupe GEi est supérieure à un écart prédéfini, le procédé se poursuit par l'étape 1500.

A l'étape 1500, d'exécution du module 150, le groupe d'individus enfants GEi est affecté en tant que groupe d'individus parents GPi+1 pour l'itération suivante des étapes 1100, 1200, 1300 et 1400.

Si, en revanche, l'écart entre la valeur la plus grande Hjmax et la valeur la plus faible Hjmin des valeurs Hj des individus du groupe GEi est inférieure à l'écart prédéfini, le procédé sort de la boucle d'itération des étapes 1100, 1200, 1300 et 1400.

En variante, la condition de convergence testée à l'étape 1400 consiste simplement à vérifier si un nombre maximal d'itérations a été dépassé (par exemple 100 itérations).

L'individu du groupe GEi qui présente la valeur Hj la plus faible est retenu comme individu solution Is.

Cet individu solution Is constitue la solution recherchée du procédé d'optimisation. Il indique le nombre et le positionnement des sondes DPI à placer dans le réseau 10 pour obtenir une analyse DPI efficace au sens où elle respecte les différents critères C(k) sélectionnés.

Le procédé met en oeuvre un algorithme génétique permettant, par itérations successives, de faire évoluer une population d'individus représentant des configurations possibles de la composante DPI, et de sélectionner dans cette population les individus qui s'approchent de la solution optimum recherchée, c'est-à-dire qui présentent une valeur de la fonction de coût la plus faible compte tenue des critères retenus.

Le procédé permet de converger rapidement vers une solution optimale.

## Revendications

1. Procédé de détermination du nombre et du positionnement de sondes DPI, pour « Deep Paquet Inspection », dans un réseau de communication (10), les sondes DPI constituant une composante dite DPI, permettant une analyse du type « inspection des paquets en profondeur » de paquets de données interceptés sur le réseau,
**caractérisé en ce qu'**il comporte les étapes consistant à :
a- à partir d'un groupe d'individus parents (GPi), générer une population d'individus enfants (PEi), chaque individu correspondant à une configuration possible de la composante DPI en termes de nombre et de positionnement de sondes DPI dans le réseau de communication ;
b- pour chaque individu (Ij) de la population d'individus enfants (PEi), simuler le comportement du réseau de communication équipé de la composante DPI correspondant audit individu ;
c- évaluer une valeur (Hj) d'une fonction de coût (H) pour ledit individu en fonction notamment du comportement simulé ;
d- sélectionner dans ladite population d'individus enfants (PEi), un groupe d'individus enfants (GEi) présentant les valeurs les plus faibles de la fonction de coût ; et,
tant qu'une condition de convergence n'est pas respectée, itérer les étapes a à d en considérant en tant que groupe d'individus parents pour l'itération suivante (GPi+1), le groupe d'individus enfants de l'itération courante (GEi), sinon retenir un individu du groupe d'individus enfants en tant qu'individu solution (Is), l'individu solution donnant la configuration optimale de la composante DPI.

2. Procédé selon la revendication 1, dans lequel la simulation du comportement du réseau comporte le calcul d'une matrice de routage (Rj) pour l'individu considéré (Ij).

3. Procédé selon la revendication 1 ou la revendication 2, dans lequel la fonction de coût (H) est la somme pondérée de fonctions de coût élémentaires (H(k)) correspondant chacune à un critère quantitatif que doit respecter la configuration optimale de la composante DPI.

4. Procédé selon la revendication 3, dans lequel le critère est choisi parmi :
- un premier critère consistant à minimiser le nombre de sondes DPI dans la composante DPI ;
- un second critère consistant à minimiser la modification de la bande passante utilisée avec et sans la composante DPI ;
- un troisième critère consistant à minimiser la modification du temps de latence avec et sans la composante DPI ;
- un quatrième critère consistant à minimiser le nombre de flux qui ne sont pas analysés par la composante DPI.

5. Procédé selon l'une quelconque des revendications 1 à 4, dans lequel l'étape de sélection dans la population d'individus enfants (PEi) d'un groupe d'individus enfants (GEi) consiste à retenir les K individus présentant les valeurs les plus faibles de la fonction de coût (Hj).

6. Procédé selon l'une quelconque des revendications 1 à 4, dans lequel l'étape de génération d'une population d'individus enfants (PEi) à partir d'un groupe d'individus parents (GPi) consiste à recopier les individus dudit groupe dans ladite population et à compléter ladite population.

7. Procédé selon la revendication 6, dans lequel la population est complétée en générant un individu enfant par hybridation de deux individus parents choisi au hasard dans le groupe d'individus parents de manière à obtenir un individu enfant intermédiaire et à faire muter de manière aléatoire l'individu enfant intermédiaire pour obtenir ledit individu enfant.

8. Procédé selon la revendication 7, dans lequel un individu étant représenté par une liste ordonnée de bits, une mutation consiste à basculer la valeur d'un bit à 0 avec une première probabilité (p1) et à basculer la valeur d'un bit à 1 avec une seconde probabilité (p2).

## Patentansprüche

1. Verfahren zur Bestimmung der Anzahl und der Positionierung von DPI-Sonden, für "Deep Paquet Inspection", in einem Kommunikationsnetzwerk (10), wobei die DPI-Sonden eine DPI genannte Komponente darstellen, die eine Analyse vom Typ "Deep Paquet Inspection" von im Netzwerk abgefangenen Datenpaketen ermöglicht,
**dadurch gekennzeichnet, dass** es die Schritte umfasst, die bestehen in:
a- anhand einer Gruppe von Elternindividuen (GPi) eine Population von Nachkommenindividuen (PEi) zu erzeugen, wobei jedes Individuum einer möglichen Konfiguration der DPI-Komponente hinsichtlich Anzahl und Positionierung von DPI-Sonden in dem Kommunikationsnetzwerk entspricht;
b- für jedes Individuum (Ij) der Population von Nachkommenindividuen (PEi) das Verhalten des Kommunikationsnetzwerkes zu simulieren, das mit der dem besagten Individuum entsprechenden DPI-Komponente ausgestattet ist;
c- einen Wert (Hj) einer Kostenfunktion (H) für das besagte Individuum in Abhängigkeit insbesondre von dem simulierten Verhalten zu beurteilen;
d- in der besagten Population von Nachkommenindividuen (PEi) eine Gruppe von Nachkommenindividuen (GEi) auszuwählen, die die schwächsten Werte der Kostenfunktion aufweisen; und,
sofern eine Konvergenzbedingung nicht erfüllt ist, die Schritte a bis d zu wiederholen, wobei als Gruppe von Elternindividuen für die nachfolgende Wiederholung (GPi+1) die Gruppe von Nachkommenindividuen der aktuellen Wiederholung (GEi) berücksichtigt wird, anderenfalls ein Individuum aus der Gruppe von Nachkommenindividuen als Lösungsindividuum (Is) zu behalten, wobei das Lösungsindividuum die optimale Konfiguration der DPI-Komponente gibt.

2. Verfahren nach Anspruch 1, in welchem die Simulation des Verhaltens des Netzwerkes die Berechnung einer Routingmatrix (Rj) für das berücksichtigte Individuum (Ij) beinhaltet.

3. Verfahren nach einem Anspruch 1 oder Anspruch 2, in welchem die Kostenfunktion (H) die gewichtete Summe aus elementaren Kostenfunktionen (H(k)) ist, von denen jede einem quantitativen Kriterium entspricht, das die optimale Konfiguration der DPI-Komponente erfüllen muss.

4. Verfahren nach Anspruch 3, in welchem das Kriterium ausgewählt wird unter:
- einem ersten Kriterium, bestehend in der Minimierung der Anzahl an DPI-Sonden in der DPI-Komponente;
- einem zweiten Kriterium, bestehend in der Minimierung der Veränderung der verwendeten Bandbreite mit und ohne DPI-Komponente;
- einem dritten Kriterium, bestehend in der Minimierung der Veränderung der Latenzzeit mit und ohne DPI-Komponente;
- einem vierten Kriterium, bestehend in der Minimierung der Anzahl von Flüssen, die nicht durch die DPI-Komponente analysiert werden.

5. Verfahren nach einem der Ansprüche 1 bis 4, in welchem der Schritt zur Auswahl in der Population von Nachkommenindividuen (PEi) von einer Gruppe von Nachkommenindividuen (GEi) darin besteht, die K Individuen zu behalten, die die schwächsten Werte der Kostenfunktion (Hj) aufweisen.

6. Verfahren nach einem der Ansprüche 1 bis 4, in welchem der Schritt zur Erzeugung einer Population von Nachkommenindividuen (PEi) anhand einer Gruppe von Elternindividuen (GPi) darin besteht, die Individuen der besagten Gruppe in der besagten Population zu kopieren und die besagte Population zu vervollständigen.

7. Verfahren nach Anspruch 6, in welchem die Population vervollständigt wird, indem ein Nachkommenindividuum durch Hybridisierung von zwei willkürlich aus der Gruppe von Elternindividuen ausgewählten Elternindividuen erzeugt wird, um ein intermediäres Nachkommenindividuum zu erhalten und auf zufällige Weise das intermediäre Nachkommenindividuum zu mutieren, um das besagte Nachkommenindividuum zu erhalten.

8. Verfahren nach Anspruch 7, in welchem ein Individuum durch eine geordnete Liste von Bits dargestellt wird, eine Mutation darin besteht, den Wert eines Bits auf 0 mit einer ersten Wahrscheinlichkeit (p1) zu kippen und den Wert eines Bits auf 1 mit einer zweiten Wahrscheinlichkeit (p2) zu kippen.

## Claims

1. Method of determining the number and positioning of DPI, deep packet inspection, probes in a communication network (10), the DPI probes constituting a DPI component, permitting analysis of the "deep packet inspection" type of data packets intercepted on the network,
**characterised in that** it comprises steps consisting in:
a- starting from a group of parent individuals (GPi), generating a population of child individuals (PEi), each individual corresponding to a possible configuration of the DPI component in terms of the number and positioning of DPI probes in the communication network;
b- for each individual (Ij) of the population of child individuals (PEi), simulating the behaviour of the communication network equipped with the DPI component corresponding to said individual;
c- evaluating a value (Hj) of a cost function (H) for said individual as a function especially of the simulated behaviour;
d- selecting from said population of child individuals (PEi) a group of child individuals (GEi) exhibiting the lowest values of the cost function; and
as long as a convergence condition is not complied with, iterating steps a to d taking the group of child individuals of the current iteration (GEi) as the group of parent individuals for the following iteration (GPi+1), otherwise retaining an individual from the group of child individuals as the solution individual (Is), the solution individual giving the optimal configuration of the DPI component.

2. Method according to claim 1, wherein the simulation of the behaviour of the network comprises calculating a routing matrix (Rj) for the individual under consideration (Ij).

3. Method according to claim 1 or claim 2, wherein the cost function (H) is the weighted sum of basic cost functions (H(k)) each corresponding to a quantitative criterion with which the optimal configuration of the DPI component must comply.

4. Method according to claim 3, wherein the criterion is chosen from:
- a first criterion consisting in minimising the number of DPI probes in the DPI component;
- a second criterion consisting in minimising the modification of the bandwidth used with and without the DPI component;
- a third criterion consisting in minimising the modification of the latency with and without the DPI component;
- a fourth criterion consisting in minimising the number of streams which are not analysed by the DPI component.

5. Method according to any one of claims 1 to 4, wherein the step of selecting a group of child individuals (GEi) from the population of child individuals (PEi) consists in retaining the K individuals exhibiting the lowest values of the cost function (Hj).

6. Method according to any one of claims 1 to 4, wherein the step of generating a population of child individuals (PEi) starting from a group of parent individuals (GPi) consists in copying the individuals of said group into said population and in completing said population.

7. Method according to claim 6, wherein the population is completed by generating a child individual by hybridisation of two parent individuals chosen at random from the group of parent individuals so as to obtain an intermediate child individual and in randomly mutating the intermediate child individual in order to obtain said child individual.

8. Method according to claim 7, wherein, an individual being represented by an ordered list of bits, a mutation consists in switching the value of a bit to 0 with a first probability (p1) and in switching the value of a bit to 1 with a second probability (p2).
